Europäisches Patentamt

European Patent Office

Office européen des brevets

(19)

(11) Numéro de publication : **0 102 306**
**B1**

(12) **FASCICULE DE BREVET EUROPÉEN**

(45) Date de publication du fascicule du brevet :
08.07.87

(51) Int. Cl.⁴ : **B 60 S   1/52**

(21) Numéro de dépôt : **83440041.8**

(22) Date de dépôt : **19.07.83**

(54) Gicleur de lave-glace à inclinaison de jet variable en fonction de la vitesse du véhicule.

(30) Priorité : **21.07.82 FR 8213038**
**15.02.83 FR 8302620**
**06.07.83 FR 8311565**

(43) Date de publication de la demande :
**07.03.84 Bulletin 84/10**

(45) Mention de la délivrance du brevet :
**08.07.87 Bulletin 87/28**

(84) Etats contractants désignés :
**AT BE CH DE GB IT LI LU NL SE**

(56) Documents cités :
**DE-A- 1 580 051**
**DE-A- 2 024 769**
**DE-A- 2 035 861**
**DE-A- 3 047 396**
**FR-A- 2 074 457**
**FR-A- 2 271 960**

(73) Titulaire : **FABRIQUE DE PRODUITS CHIMIQUES,**
**D'ENTRETIEN ET DE DEGRAISSAGE RAVICOLOR,**
**S.A. Société dite:**
**32, rue de Mulhouse**
**F-68300 Saint-Louis (FR)**

(72) Inventeur : **Hueber, François**
**45 rue du Dr. Hurst**
**F-68300 Saint-Louis (FR)**

(74) Mandataire : **Nuss, Pierre**
**10, rue Jacques Kablé**
**F-67000 Strasbourg (FR)**

EP 0 102 306 B1

## Description

La présente invention concerne le domaine des accessoires de véhicules automobiles, en particulier des lave-glaces, et a pour objet un gicleur de lave-glace à inclinaison de jet variable en fonction de la vitesse de véhicule (DE-A-2 035 861).

Actuellement, les gicleurs de lave-glace sont généralement montés de manière fixe sur la partie de carrosserie s'étendant devant le pare-brise, au moyen d'un écrou avec interposition d'une rondelle d'étanchéité, et sont reliés à un réservoir de liquide de lavage par l'intermédiaire d'une pompe électrique ou mécanique.

Ces gicleurs connus sont le plus souvent montés sur les véhicules de telle manière qu'à une vitesse prédéterminée, par exemple de l'ordre de 80 km/h, le jet de liquide de lavage atteigne sensiblement la zone médiane de balayage des essuie-glaces.

Cependant, ces gicleurs ne permettent pas un lavage efficace du pare-brise à l'arrêt ou à petite vitesse, le jet risquant alors de dépasser le sommet dudit pare-brise.

La présente invention a pour but de pallier ces inconvénients.

Elle a, en effet, pour objet un gicleur de lave-glace à inclinaison de jet variable en fonction de la vitesse du véhicule, ce gicleur étant fixe et doublé par un deuxième gicleur présentant un jet de direction différente dans un plan vertical, caractérisé en ce que les gicleurs sont alimentés par l'intermédiaire d'une vanne électromagnétique à bille à trois voies — deux directions, l'une des voies de la vanne correspondant au jet nécessaire à basse vitesse, et l'autre au jet nécessaire à haute vitesse.

Selon une autre caractéristique de l'invention, chaque gicleur est un gicleur à deux sorties, soit disposées horizontalement côte à côte et présentant entre elles un décalage angulaire suivant un plan vertical, soit disposées verticalement l'une au-dessus de l'autre avec des inclinaisons de jet différentes dans le plan vertical, chaque sortie de gicleur étant branchée à une voie d'une vanne électromagnétique à bille à trois voies — deux directions.

Conformément à une autre variante de réalisation de l'invention, chaque gicleur est un gicleur vertical à deux sorties à jets de directions différentes dans le plan vertical, dans lequel est logé un tiroir de distribution à commande électromagnétique relié à un conduit d'alimentation.

L'invention sera mieux comprise grâce à la description ci-après, qui se rapporte à des modes de réalisation préférés, donnés à titre d'exemples non limitatifs et expliqués avec différence aux dessins schématiques annexés, dans lesquels :

la figure 1 est une vue schématique d'une disposition de gicleurs conforme à l'invention coopérant avec une vanne de distribution ;

la figure 2 est une vue en coupe d'une variante de réalisation de la figure 1 ;

la figure 3 est une vue en coupe d'une vanne électromagnétique à bille à trois voies — deux directions conforme à l'invention,

la figure 4 est une vue analogue à celle de la figure 3 d'une variante de réalisation de la vanne, et

la figure 5 est une vue en coupe d'une autre variante de réalisation de l'invention.

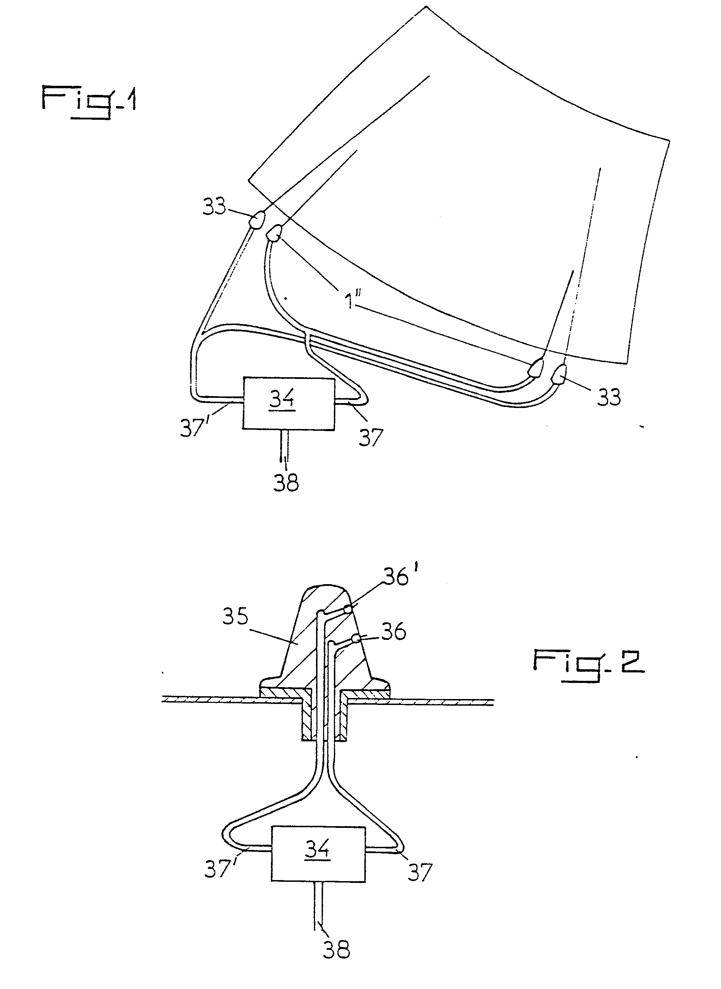

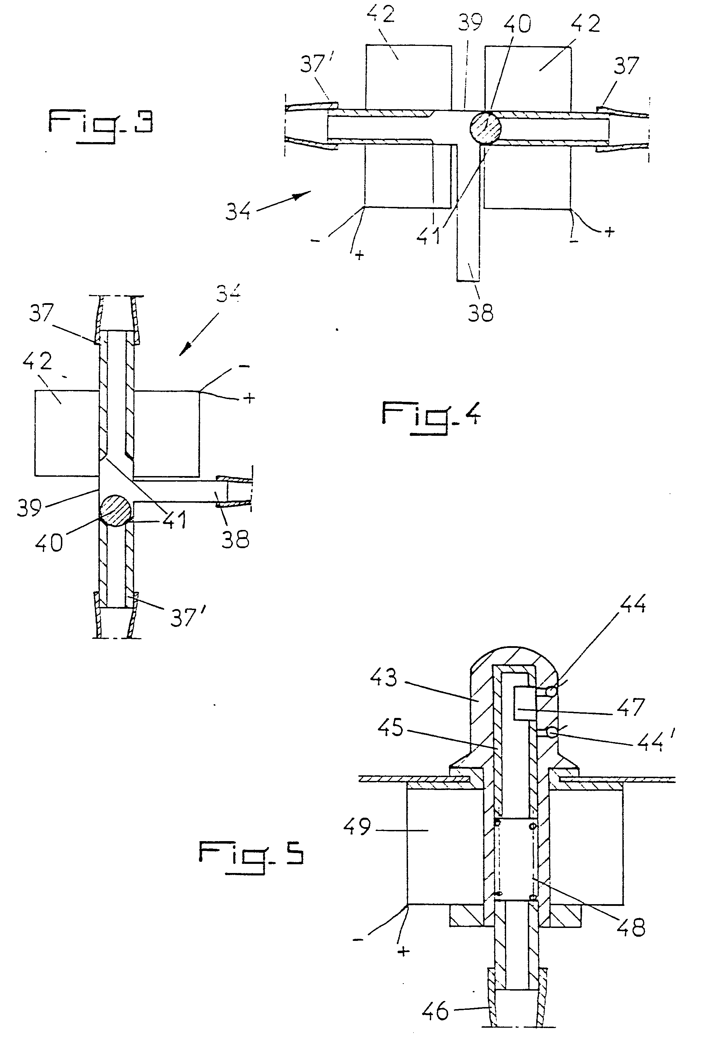

La figure 1 des dessins annexés représente un pare-brise de véhicule automobile devant lequel sont montés des gicleurs de lave-glace 1″. Conformément à l'invention, chaque gicleur 1″ est fixe et est doublé par un deuxième gicleur 33, qui présente un jet de direction différente dans un plan vertical. Ces gicleurs 1″ et 33 sont alimentés au moyen d'une vanne électromagnétique à bille 34 à trois voies — deux directions, qui sera décrite plus en détail ci-après avec référence à la figure 3. Dans ce mode de réalisation, l'une des voies 37 de la vanne 34 est reliée aux gicleurs 1″ correspondant, par exemple, aux jets nécessaires à basse vitesse, tandis que l'autre voie 37′ est reliée aux gicleurs 33 destinés à délivrer des jets à haute vitesse.

Il est également possible, comme le montre la figure 2, d'alimenter au moyen de la vanne 34 des gicleurs 35 présentant chacun deux sorties 36-36′, qui peuvent être, soit disposées horizontalement côte à côte avec un décalage angulaire suivant un plan vertical, soit disposées verticalement (cas de la figure 2) l'une, 36′, au-dessus de l'autre, 36, avec des inclinaisons de jet différentes. Dans ce mode de réalisation, chaque sortie 36, 36′ des gicleurs 35 est branchée sur une voie correspondante 37, 37′ de la vanne 34.

Cette dernière (figure 3) est avantageusement réalisée sous forme d'un corps présentant un orifice d'entrée 38 et deux orifices de sorties correspondant aux voies 37 et 37′ alignés entre eux et reliés par un canal 39 dans lequel débouche le canal prolongeant l'orifice d'entrée 38 ce canal 39 renfermant une bille en fer 40, éventuellement revêtue d'une couche de protection contre la corrosion, qui s'applique dans ses positions extrêmes contre un ajutage 41 prévu de chaque côté du canal 39, de part et d'autre du canal de l'orifice 38, sous l'effet du champ magnétique développé par un enroulement correspondant 42, et ferme ainsi la voie 37 ou la voie 37′.

La commande de la vanne électromagnétique à bille 34 est avantageusement réalisée au moyen d'un interrupteur à deux positions à retour automatique en position de repos, qui permet la mise sous tension de l'enroulement 42 correspondant à la voie 37 dans l'une de ses positions, et la mise sous tension de l'autre enroulement 42 correspondant à l'autre voie 37′ dans l'autre position, ainsi que, simultanément la commande de la pompe à liquide de lavage. Ainsi, dans le premier cas, la bille 40 est appliquée contre l'ajutage 41 et ferme la voie 37, tandis que dans l'autre cas elle est appliquée sur l'autre ajutage 41 et ferme la voie 37′.

Suivant la vitesse du véhicule et l'inclinaison de jet nécessaire, le conducteur peut donc actionner à volonté son interrupteur de commande et ainsi la vanne 34.

La figure 4 représente une variante de réalisation de la vanne 34, dans laquelle seule la partie de canal 39 correspondant à l'une des voies (par exemple 37) est entourée par un enroulement 42, le canal 39 étant alors disposé verticalement avec l'enroulement 42 en partie superieure, la bille 40 étant appliquée contre l'ajutage 41 de l'autre voie (par exemple 37') sous l'effet de son poids propre en position de repos de l'enroulement 42. Ainsi, l'utilisation de l'une des positions des gicleurs ne nécessitera que l'actionnement de la pompe à liquide de lavage au moyen de l'interrupteur, tandis que les autres gicleurs nécessiteront l'actionnement simultané de ladite pompe et de l'enroulement 42.

La figure 5 représente une autre variante de réalisation de l'invention, dans laquelle le gicleur 43 est un gicleur vertical à deux sorties 44-44' à jets de directions différentes dans un plan vertical, et ce gicleur 43 loge un tiroir de distribution 45 à commande électromagnétique, qui est relié à un conduit d'alimentation 46.

Dans ce mode de réalisation, le tiroir 45 est avantageusement réalisé en fer, éventuellement revêtu d'une protection anti-corrosion, et se présente sous forme d'un corps creux ouvert à sa partie inférieure en communication avec le conduit d'alimentation 46, muni à sa partie supérieure d'une fente horizontale 47 de sortie du liquide, et chargé à sa partie inférieure par un ressort de rappel 48.

Le corps du gicleur 43 renferme dans sa base un enroulement 49 entourant le logement du tiroir 45 et destiné à attirer ce dernier vers le bas contre l'action du ressort 48, lors d'une mise sous tension dudit enroulement 49, au moyen d'un interrupteur à deux positions de travail à retour automatique en position de repos, par le conducteur du véhicule.

L'interrupteur de commande de l'enroulement 49 présente avantageusement une première position d'actionnement de la pompe à liquide de lavage uniquement, et une deuxième position d'actionnement simultané de ladite pompe et de mise sous tension de l'enroulement 49, ces positions d'actionnement pouvant également être inversées.

Ainsi, dans la position de repos du tiroir 45, dans laquelle sa fente 47 est en communication avec la sortie 44 du gicleur 43 correspondant, par exemple, à la délivrance d'un jet à haute vitesse, il suffit au conducteur d'actionner son interrupteur de commande dans sa première position pour réaliser un lavage correct. Pour passer à un lavage à faible vitesse du véhicule, le conducteur actionne l'interrupteur dans sa seconde position, dans laquelle l'enroulement 49 attire le tiroir 45 contre le ressort 48 pour amener la fente de ce dernier face à la sortie 44' correspondant à un jet de direction différente du premier. Dès que l'interrupteur est relâché, l'enroulement 49 n'est plus sous tension, et le tiroir 45 remonte à sa position de départ sous l'effet du ressort 48 conjugué à celui de la pression règnant dans le tiroir 45 et le conduit d'alimentation 46.

Grâce à l'invention, il est possible de réaliser un gicleur permettant un arrosage parfait du pare-brise, quelle que soit la vitesse du véhicule, par prise en compte de ladite vitesse, et des paramètres propres à chaque véhicule ou type de véhicules.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

**Revendications**

1. Gicleur de lave-glace à inclinaison de jet variable en fonction de la vitesse du véhicule, ce gicleur (1") étant fixe et doublé par un deuxième gicleur (33) présentant un jet de direction différente dans un plan vertical, caractérisé en ce que les gicleurs (1"-33) sont alimentés par l'intermédiaire d'une vanne électromagnétique à bille (34) à trois voies — deux directions, l'une des voies (37) de la vanne (34) correspondant au jet nécessaire à basse vitesse, et l'autre (37') au jet nécessaire à haute vitesse.

2. Gicleur, suivant la revendication 1, caractérisé en ce que chaque gicleur (35) est un gicleur à deux sorties (36-36'), soit disposées horizontalement côte à côte et présentant entre elles un décalage angulaire suivant un plan vertical, soit disposées verticalement l'une au-dessus de l'autre avec des inclinaisons de jet différentes dans le plan vertical, chaque sortie de gicleur étant branchée à une voie (37-37') d'une vanne électromagnétique à bille (34) à trois voies — deux directions.

3. Gicleur, suivant l'une quelconque des revendications 1 et 2 caractérisé en ce que la vanne électromagnétique à bille (34) est avantageusement réalisée sous forme d'un corps présentant un orifice d'entrée (38) et deux orifices de sorties correspondant aux voies (37) et (37') alignés entre eux et reliés par un canal (39) dans lequel débouche le canal prolongeant l'orifice d'entrée (38), ce canal (39) renfermant une bille en fer (40), éventuellement revêtue d'une couche de protection contre la corrosion, qui s'applique dans ses positions extrêmes contre un ajutage (41) prévu de chaque côté du canal (39), de part et d'autre du canal de l'orifice (38), sous l'effet du champ magnétique développé par un enroulement correspondant (42), et ferme ainsi la voie (37) ou la voie (37').

4. Gicleur, suivant la revendication 3, caractérisé en ce que la partie de canal (39) correspondant à l'une des voies est entourée par un enroulement (42), le canal (39) étant alors disposé verticalement avec l'enroulement (42) en partie supérieure, la bille (40) étant appliquée contre l'ajutage (41) de l'autre voie sous l'effet de son poids propre en position de repos de l'enroulement (42).

5. Gicleur, suivant l'une quelconque des revendications 1 à 3, caractérisé en ce que la ccmmande de la vanne électromagnétique à bille (34) est avantageusement réalisée au moyen d'un interrupteur à deux positions à retour automatique en position de repos, qui permet la mise sous tension de l'enroulement (42) correspondant à la voie (37) dans l'une de ses positions, et la mise sous tension de l'autre enroulement (42) correspondant à l'autre voie (37') dans l'autre position, ainsi que, simultanément la commande de la pompe à liquide de lavage.

6. Gicleur, suivant la revendication 1, caractérisé en ce que chaque gicleur (43) est un gicleur vertical à deux sorties (44-44') à jets de directions différentes dans le plan vertical, dans lequel est logé un tiroir (45) de distribution à commande électromagnétique relié à un conduit d'alimentation (46).

7. Gicleur, suivant la revendication 6, caractérisé en ce que le tiroir (45) est avantageusement réalisé en fer, éventuellement revêtu d'une protection anti-corrosion, et se présente sous forme d'un corps creux ouvert à sa partie inférieure en communication avec le conduit d'alimentation (46), muni à sa partie supérieure d'une fente horizontale (47) de sortie du liquide, et chargé à sa partie inférieure par un ressort de rappel (48).

8. Gicleur, suivant l'une quelconque des revendications 6 et 7, caractérisé en ce que le corps du gicleur (43) renferme dans sa base un enroulement (49) entourant le logement du tiroir (45) et destiné à attirer ce dernier vers le bas contre l'action du ressort (48), lors d'une mise sous tension dudit enroulement (49), au moyen d'un interrupteur à deux positions de travail à retour automatique en position de repos par le conducteur du véhicule.

9. Gicleur, suivant la revendication 8, caractérisé en ce que l'interrupteur de commande de l'enroulement (49) présente avantageusement une première position d'actionnement de la pompe à liquide de lavage uniquement, et une deuxième position d'actionnement simultané de ladite pompe et de mise sous tension de l'enroulement (49), ces positions d'actionnement pouvant également être inversées.

**Claims**

1. A windscreen washer nozzle with jet inclination variable depending on the speed of the vehicle, this nozzle (1") being fixed and duplicated by a second nozzle (33) having a jet with a different direction in a vertical plane, characterised in that the jets (1"-33) are fed by means of a three-way/two-directional ball-type electromagnetic valve (34), one of the ways (37) of the valve (34) corresponding to the jet necessary at low speed and the other (37') to the jet necessary at high speed.

2. A nozzle according to claim 1, characterised in that each nozzle (35) is a nozzle with two outlets (36-36'), either disposed horizontally side by side and being mutually angularly offset in a vertical plane or disposed vertically one above the other with different jet inclinations in the vertical plane, each nozzle outlet being connected to one way (37-37') of a three-way/two-directional ball-type electromagnetic valve (34).

3. A nozzle according to either one of claims 1 and 2, characterised in that the ball-type electromagnetic valve (34) is preferably constructed in the form of a body having an inlet orifice (38) and two outlet orifices corresponding to the ways (37) and (37'), the latter orifices being aligned with one another and connected by a passage (39) into which opens the passage extending the inlet orifice (38), this passage (39) enclosing an iron ball (40), which may be covered with a protective layer against corrosion, which is applied in its extreme positions against an adjutage (41) provided at each side of the passage (39), on both sides of the passage from the orifice (38), under the effect of the magnetic field developed by a corresponding winding (42), and thus closes the way (37) or the way (37').

4. A nozzle, according to claim 3, characterised in that the portion of the passage (39) corresponding to one of the ways is surrounded by a winding (42), the passage (39) then being disposed vertically with the winding (42) at the upper portion, the ball (40) being applied against the adjutage (41) of the other way under the effect of its own weight when the winding (42) is in the position of rest.

5. A nozzle, according to any one of the claims 1 to 3, characterised in that the control of the ball-type electromagnetic valve (34) is preferably effected by means of a two-position switch with automatic return to the position of rest, which enables voltage to be applied to the winding (42) corresponding to the way (37) in one of its positions, and voltage to be applied to the other winding (42) corresponding to the other way (37') in the other position, as well as, simultaneously, the control of the washing-liquid pump.

6. A nozzle, according to claim 1, characterised in that each nozzle (43) is a vertical nozzle with two outlets (44-44') with jets in different directions in the vertical plane, in which there is housed a distributing slide valve (45) controlled electromagnetically and connected to a supply conduit (46).

7. A nozzle, according to claim 6, characterised in that the slide valve (45) is preferably made of iron, which may be covered with an anti-corrosion protection, and appears in the form of a hollow body open at its lower portion in communication with the supply conduit (46), equipped at its upper portion with a horizontal slot (47) for the outflow of the liquid, and loaded at its lower portion by a return spring (48).

8. A nozzle, according to either one of the claims 6 and 7, characterised in that the body of the nozzle (43) contains in its base a winding (49) surrounding the housing of the slide valve (45) and adapted to attract the latter downwards against the action of the spring (48), when voltage is applied to said winding (49), by means of a switch with two working positions and automatic return to the position of rest, by the driver of the vehicle.

9. A nozzle, according to claim 8, characterised in that the switch controlling the winding (49) preferably has a first position for actuating the washing-liquid pump only, and a second position for simultaneously actuating the said pump and applying voltage to the winding (49), which actuating positions may likewise be inversed.

## Patentansprüche

1. Spritzdüse für Scheibenwascher mit je nach der Geschwindigkeit des Wagens variablem, schräggestelltem Strahl, wobei diese Spritzdüse (1″) stationär ist und durch eine zweite Spritzdüse (33) verstärkt wird, welche einen Strahl mit in einer vertikalen. Ebene abweichenden Richtung aufweist, dadurch gekennzeichnet, daß die Spritzdüsen (1″-33) mit Hilfe eines elektromagnetischen Dreiwege-Zweirichtungs-Kugelventils (34) gespeist werden, wobei einer der Wege (37) des Ventils (34) dem bei niedriger Geschwindigkeit, und der andere (37′) dem bei hoher Geschwindigkeit erforderlichen Strahl entspricht.

2. Düse nach Anspruch 1, dadurch gekennzeichnet, daß jede Spritzdüse (35) eine Düse mit zwei Ausgängen (36-36′) darstellt, die entweder horizontal nebeneinander angeordnet sind und zueinander, gemäß einer vertikalen Ebene, eine Winkelverschiebung aufweisen, oder vertikal übereinander mit verschiedenen Strahlneigungswinkeln in der vertikalen Ebene angeordnet sind, wobei jeder Düsenausgang an einem Weg (37-37′) eines elektromagnetischen Dreiwege-Zweirichtungs-Kugelventil (34) angeschlossen ist.

3. Düse nach einem der Ansprüche 1 und 2, dadurch gekennzeichnet, daß das elektromagnetische Kugelventil (34) vorteilhaft in Form eines Körpers ausgeführt ist, der eine Eingangsöffnung (38) und zwei den Wegen (37) und (37′) entsprechende Ausgangsöffnungen aufweist, die zueinander ausgerichtet und mit einem Kanal (39) verbunden sind, in welchen der die Eingangsöffnung (38) fortsetzende Kanal mündet, wobei dieser Kanal (39) eine eventuell mit einer Schutzschicht gegen Korrosion überzogene Eisenkugel (40) umschließt, die in ihren Endstellungen gegen einen an jeder Seite des Kanals (39), zu beiden Seiten des Kanals der Öffnung (38), unter Einwirkung des durch eine entsprechende Wicklung (42) gebildeten Magnetfeldes, vorgesehenen Ansatz (41) drückt, und so den Weg (37) oder den Weg (37′) schließt.

4. Düse nach der Anspruch 3, dadurch gekennzeichnet, daß der einem der Wege entsprechende Teil des Kanals (39) von einer Wicklung (42) umgeben ist, wobei der Kanal (39) dann vertikal mit der Wicklung (42) an dem Oberteil angeordnet ist, und die Kugel (40) gegen den Ansatz (41) des anderen Weges unter Einwirkung ihres Eigengewichts in Ruhestellung der Wicklung (42) drückt.

5. Düse nach einem der Ansprüche 1 bis 3, dadurch gekennzeichnet, daß die Betätigung des elektromagnetischen Kugelventils (34) vorteilhaft mittels eines Zweistellungsschalters mit in Ruhestellung automatischer Rückführung ausgeführt ist, der das Unterspannungsetzen der dem Weg (37) in einem seiner Positionen entsprechenden Wicklung (42), und das Unterspannungsetzen der dem anderen Weg (37′) in der anderen Position entprechenden, anderen Wicklung (42) sowie gleichzeitig die Betätigung der Pumpe für die Waschflüssigkeit ermöglicht.

6. Düse nach Anspruch 1, dadurch gekennzeichnet, daß jede Spritzdüse (43) eine vertikale Düse mit zwei Ausgängen (44-44′) mit unterschiedlichen Strahlrichtungen in der vertikalen Ebene ist, in welcher ein an eine Speiseleitung (46) angeschlossener Steuerschieber (45) mit Magnetbetätigung untergebracht ist.

7. Düse nach Anspruch 6, dadurch gekennzeichnet, daß der Schieber (45) vorteilhaft aus eventuell mit einer Anti-Korrosionsschicht überzogenenem Eisen ausgeführt ist und sich als Hohlkörper darstellt, der an seinem Unterteil offen ist und mit der Speiseleitung (46) in Verbindung steht, an seinem Oberteil mit einem horizontalen Schlitz (47) für den Austritt der Flüssigkeit versehen ist und an seinem Unterteil durch eine Rückholfeder (48) beansprucht wird.

8. Düse nach einem der Ansprüche 6 und 7, dadurch gekennzeichnet, daß der Körper der Spritzdüse (43) an ihrer Basis eine den Sitz des Schiebers (45) umgebende Wicklung (49) enthält und dazu dient, diesen letzteren nach unten gegen die Kraft der Feder (48), während des Unterspannungsetzens der besagten Wicklung (49) durch den Fahrer des Wagens, mittels eines Zweistellungs-Arbeitsschalters, mit in Ruhestellung automatischer Rückstellung, anzuziehen.

9. Düse nach Anspruch 8, dadurch gekennzeichnet, daß der Betätigungsschalter für die Wicklung (49) vorteilhaft eine erste Stellung einzig und allein für den Betrieb der Pumpe für Waschflüssigkeit, und eine zweite Stellung für den gleichzeitigen Betrieb der besagten Pumpe und das Unterspannungsetzen der Wicklung (49) aufweist, wobei diese Betriebsstellungen auch umgekehrt werden können.

Fig-1

33

1"

33

37' 34 37

38

36'

35 36

Fig-2

34

37' 37

38

0 102 306

Fig.3

Fig.4

Fig.5

2